# EUROPÄISCHE PATENTANMELDUNG

(11) **EP 4 560 497 A1**
(43) Veröffentlichungstag der Anmeldung: **28.05.2025**
(21) Anmeldenummer: 23211665.7
(22) Anmeldetag: 23.11.2023
(51) Int. Cl.: G06F 16/955

(54) **ÜBERMITTLUNG EINER KLICK-ID MITTELS EINER URL**

(71) Anmelder: Hurra Communications GmbH, 70173 Stuttgart (DE)
(72) Erfinder: Mikulski, Piotr, 30-103 Kraków (PL)
(74) Vertreter: Wörz, Volker Alfred

(57) **Zusammenfassung**

Die Erfindung betrifft ein Verfahren zur Übermittlung einer Klick-ID (32) in Abhängigkeit von der Anwahl einer von einem ersten Server (24) bereitgestellten URL (33) mittels eines einem Benutzer (23) zugeordneten Clients (24), wobei die URL (33) auf einen Zielserver (26) verweist, dadurch gekennzeichnet, dass die Klick-ID (32) in einer einem Unterverzeichnis des Zielservers (26) entsprechenden Form in die URL (33) integriert ist.

## Beschreibung

Die vorliegende Erfindung betrifft ein Verfahren zur Übermittlung einer Klick-ID mittels einer URL in Abhängigkeit von der Anwahl der von einem ersten Server bereitgestellten URL mittels eines einem Benutzer zugeordneten Clients, wobei die URL auf einen Zielserver verweist. Die Anwahl der von dem ersten Server bereitgestellten URL ermöglicht das Abfragen von Informationen, die von dem Zielserver bereitgestellt werden.

Die Erfindung betrifft auch ein Client-Server System, das mit einem Kommunikationsnetzwerk verbindbar ist und mindestens einen ersten Server, einen Zielserver sowie einen einem Benutzer zugeordneten Client umfasst.

Ein Client-Server System umfasst Clients und Server, die in Software und Hardware ausgebildet sein können und Informationen über ein Kommunikationsnetzwerk oder mehrere Kommunikationsnetzwerke austauschen. Ein Server ist beispielsweise so ausgebildet, dass er bestimmte Informationen oder Ressourcen, sogenannte Dienste, bereitstellt. Diese Dienste werden typischerweise von einem Client oder mehreren Clients in Anspruch genommen, indem Anfragen über das Kommunikationsnetzwerk an den Server gesendet werden. Der Server wertet die eingehende Anfrage aus, überprüft gegebenenfalls eine Berechtigung des Clients zum Stellen der Anfrage und übermittelt der Anfrage entsprechende Informationen beziehungsweise stellt angeforderte Ressourcen zur Verfügung. Der Server kann so ausgebildet sein, dass er seinerseits Anfragen an andere Server stellt, beispielsweise um Informationen zu erhalten, die er dann gegebenenfalls aufbereitet und den anfragenden Clients zur Verfügung stellt. In dieser Funktion agiert der Server folglich selbst als Client. Ebenso kann ein Client anderen Clients Informationen zur Verfügung stellen und agiert somit als Server. Ein Server kann beispielsweise als Suchmaschine oder als Webshop ausgebildet sein. Ein Client kann als eine auf einem Laptop, Tablet oder Smartphone ausführbare Software, beispielsweise ein Internet-Browser realisiert sein.

Eine Klick-ID kann eine Zeichenkette sein, die dem Client und oder einem Benutzer des Clients zugeordnet ist.

Grundsätzlich kann jeder auf einer Webseite dargestellten Information eine anwählbare URL (sogenannter "Uniform Resource Locator") zugeordnet sein und bei einem Anwählen dieser URL kann eine sogenannte Klick-ID in Form einer Zeichenkette übermittelt werden. Eine Klick-ID kann eine Zeichenkette sein, die dem Client und oder einem Benutzer des Clients zugeordnet ist, und somit eine mehr oder weniger eindeutige Zuordnung zu einem bestimmten Benutzer oder einer Gruppe von Benutzern ermöglicht. Von Internet-Suchmaschinen oder Social-Media-Plattformen werden oftmals Klick-IDs erzeugt, wenn ein Benutzer mittels eines Clients eine von dem jeweiligen Server bereitgestellte Information beispielsweise durch 'anklicken' auswählt.

Gemäß einem bekannten Verfahren wird von einem Benutzer eine Suchanfrage an eine von einem ersten Server betriebene Internet-Suchmaschine gestellt. Die Suchmaschine erzeugt daraufhin eine dynamische Webseite, auf welcher die Suchergebnisse zusammen mit weiteren Informationen dargestellt werden. Die weiteren Informationen können beispielsweise beworbenen Produkten zugeordnet sein, wobei die Auswahl der Werbeinformationen in Abhängigkeit von der Suchanfrage und/oder einem dem Benutzer zugeordneten Profil erfolgt. Häufig kann der Benutzer bei der Suchmaschine mittels geeigneter Cookies - kleine Zeichenfolgen, die bei dem Client abgespeichert und bei dem Senden einer Suchanfrage an die Suchmaschine übermittelt werden - identifiziert werden, so dass die Suchmaschine auf Profilinformationen zugreifen kann, die sie bei vorherigen Anfragen durch den Benutzer gesammelt hat. Oftmals verfügt der Benutzer bereits über ein Konto bei der Suchmaschine, um gezielt weitere, personalisierte Dienste, die von der Suchmaschine angeboten werden, nutzen zu können, so dass der Suchmaschine besonders detaillierte Informationen über den Benutzer zur Verfügung stehen.

Die von der Suchmaschine dynamisch erzeugte Webseite wird als Antwort auf die Informationsanfrage an den Client des Benutzers übermittelt. Wählt der Benutzer nun einen Link auf der ihm von der Suchmaschine übermittelten Webseite an, so bewirkt dies bei dem bekannten Verfahren, dass eine Informationsanfrage an einen Zielserver, beispielsweise einen Webshop, gesendet wird, der dem Link mithilfe der zugehörigen URL zugeordnet ist. Diese URL umfasst die zuvor von der Suchmaschine erzeugte, mittels eines Cookies empfangene oder von einer Datenbank ausgelesene Klick-ID in Form eines angehängten Parameters.

Derartige Parameter haben beispielsweise die folgende Form:
*"clid*=*EREklaQid_reTHuie80klrde",*
wobei *"clid"* der Name des Parameters und der Wert
*"EREklaQd_reTHuieBOklrde"*
eine Zeichenfolge ist, mit deren Hilfe der Benutzer bzw. der Client des Benutzers identifiziert werden kann. Dies wiederum ermöglicht es dem Zielserver festzustellen, welcher Benutzer oder welche Benutzergruppen besonders an einem bestimmten Angebot interessiert sind. Ist der Zielserver einem Webshop zugeordnet, so kann auf diese Weise festgestellt werden, ob ein bestimmtes Produkt aufgrund einer Platzierung eines Hinweises auf der von der Suchmaschine erzeugten Webseite angefragt oder gekauft worden ist und zukünftig können Angebot oder Werbung entsprechend optimiert werden. Insbesondere wenn der von dem Benutzer angewählte Link aufgrund einer Werbekampagne auf der Webseite der Suchmaschine oder eines anderen Informationsservers dargestellt war, ist es für den Webshop oftmals wichtig zu wissen, welcher Benutzer bzw. welche Gruppe von Benutzern, denen der den Link anwählende Benutzer zugeordnet ist, das beworbene Produkt schließlich gekauft, weiterführende Informationen zu dem Produkt angefordert, ein anderes von dem Webshop angebotenes Produkt gekauft, ein Nutzerkonto eröffnet, sich für einen Newsletter angemeldet und/oder eine andere Aktion, die in Verbindung mit dem Zweck des Webshops steht, durchgeführt hat (sogenannte Conversion), um auf diese Weise die Darstellung von Werbeinformationen in bekannter Weise beispielsweise dadurch zu optimieren, dass eine andere Darstellung gewählt wird oder diese Werbung zukünftig anderen Benutzern oder anderen Benutzergruppen oder über andere Plattformen präsentiert wird.

Bei verschiedenen Internet-Suchmaschinen und Social-Media-Plattformen haben die Klick-IDs üblicherweise unterschiedliche Parameternamen, z.B.:
*gclid* - bei Google,
*fbclid* - bei Facebook,
*msclid-* bei Microsoft Bing.

Nachteilig bei dem bekannten Verfahren ist, dass die Klick-ID mit einfachen Mitteln von der URL entfernt werden kann, so dass in diesem Fall eine Optimierung bezüglich der Darstellung von Informationen und insbesondere eine Optimierung von Werbekampagnen erschwert wird. Da die Klick-ID bei dem bekannten Verfahren als ein Parameter an die URL angehängt wird, kann dieser aus Versehen oder absichtlich von zwischengeschalteten Servern oder einem Internetbrowser beispielsweise durch einfaches Abschneiden' entfernt werden, was eine Weiterleitung einer Informationsanfrage an einen Zielserver zwar weiterhin möglich macht, jedoch die Auswertung der Conversion erschwert bzw. die Ergebnisse verschlechtert.

Aufgabe der vorliegenden Erfindung ist es, ein Verfahren und ein Client-Server System vorzuschlagen, das eine robustere Übermittlung einer Klick-ID an den Zielserver bei dem Anwählen eines auf einer Webseite dargestellten Links ermöglicht, so dass die Klick-ID insbesondere nicht durch ein einfaches Abschneiden' von Parametern aus einer URL entfernt werden kann.

Die Aufgabe wird mit einem eingangs genannten Verfahren dadurch gelöst, dass die Klick-ID in einer einem Unterverzeichnis des Zielservers entsprechenden Syntax in die URL integriert wird. Die Klick-ID wird also in der URL als Teil des sogenannten Verzeichnispfades in Form eines virtuellen (Unter-)Verzeichnisses aufgenommen. Da der Verzeichnispfad in einer URL maßgeblich ist, um eine von dem Zielserver angeforderte Information aufzufinden, können diese Teile der URL nicht ohne weiteres verändert werden. Insbesondere Prozesse, die eine URL nach unterschiedlichen Gesichtspunkten wie beispielsweise Datenschutz, Virenschutz oder das Entfernen von Spam-Informationen automatisch optimieren, können Teile des Verzeichnispfades ohne Einverständnis des Zielservers nicht verändern.

Somit ist sichergestellt, dass die Klick-ID für die weitere Nutzung nicht verloren geht und beispielsweise eine Werbekampagne, die von dem Zielserver bei dem ersten Server eingebucht worden ist, durch Auswerten der Klick-ID hinsichtlich ihrer Wirksamkeit ausreichend genau bewertet und optimiert werden kann.

Gemäß einer möglichen Ausführungsform wird auf dem Zielserver die Klick-ID von der URL extrahiert und für weitere Optimierungen und Auswertungen abspeichert. Beispielsweise können unter Verwendung der Klick-ID interne Benutzerprofile erstellt oder aktualisiert werden. Ist der Zielserver beispielsweise ein Webshop und der erste Server eine Internet-Suchmaschine, so besteht eine Möglichkeit der internen Weiterverarbeitung darin, dass dem Benutzer, der durch Anwahl der URL von der Suchmaschine zu dem Webshop geleitet worden ist und infolge dessen ein Produkt oder eine Dienstleistung erworben hat, bei einer weiteren Suchanfrage bei der Internet-Suchmaschine bevorzugt eine weitere URL des Webshops zu einem weiteren Produkt als Teil der Suchergebnisse oder als zusätzliche Werbung angezeigt wird.

Vorzugsweise wird zumindest im Fall einer Conversion die extrahierte Klick-ID an den ersten Server für eine weitere Bearbeitung übermittelt. Auf diese Weise lassen sich Werbekampagnen oder bezahlte Optimierungen bei der Darstellung von Informationen des Zielservers in der Ergebnisliste des ersten Servers besonders gut und zuverlässig bewerten und somit für zukünftige Anfragen optimieren.

Um bei der Anwahl der auf dem ersten Server als Link dargestellten URL die damit gewünschte Information sicher auffinden zu können, wird gemäß einer möglichen Ausführungsform der Erfindung die in den Verzeichnispfad integrierte Klick-ID bei dem Auffinden der angeforderten Information nicht berücksichtigt. Dies trägt dem Umstand Rechnung, dass auf dem Zielserver regelmäßig ein Verzeichnis, das der Klick-ID entspricht, nicht existiert. Vorzugsweise wird hierbei die Klick-ID von dem Verzeichnispfad vor dessen Weiterverarbeitung entfernt, so dass von da an das Auffinden der angeforderten Information nach den üblichen Verfahren und mit den auf dem Zielserver installierten Prozessen ablaufen kann.

Oftmals ist einem Zielserver ein zweiter Server vorgeschaltet, so dass ein Anwählen eines auf dem ersten Server dargestellten Links zunächst eine Weiterleitung zu dem zweiten Server zur Folge hat und der zweite Server dann eine Weiterleitung zu dem Zielserver veranlasst. Der zweite Server kann beispielsweise als ein spezieller Tracking-Server ausgebildet sein, der im Auftrag des Zielservers Daten über Informationsanfragen bei dem Zielserver erhebt und auswertet und auf dieser Grundlage Optimierungen vorschlagen kann, wie beispielsweise das Optimieren von Werbekampagnen oder eine Optimierung der Platzierung auf Suchmaschinen.

Gemäß einer vorteilhaften Ausführungsform, bei der die Anwahl der URL zunächst eine Weiterleitung zu einem zweiten Server bewirkt, der dann die Weiterleitung zu dem Zielserver veranlasst, wird die in Form eines Unterverzeichnisses integrierte Klick-ID von dem zweiten Server extrahiert, abgespeichert und von diesem beispielsweise für mögliche Optimierungen verwendet. Hierbei kann der zweite Server die in Form eines Unterverzeichnisses in die URL integrierte Klick-ID aus der URL entfernen und mit dieser veränderten URL eine Weiterleitung zu dem Zielserver veranlassen. Das hat den Vorteil, dass auf dem Zielserver keine Veränderungen bei der weiteren Verarbeitung der mittels der erhaltenen URL gestarteten Informationsabfrage erfolgen muss.

Gemäß einer möglichen Ausführungsform stellt der zweite Server die extrahierte Klick-ID dem Zielserver direkt zur Verfügung, beispielsweise dadurch, dass der zweite Server diese Klick-ID in einer Datenbank, auf die auch der Zielserver Zugriff hat, derart abspeichert, dass eine Zuordnung zu der Informationsanfrage möglich ist und insbesondere im Falle einer Conversion feststellbar bleibt, dass das Anwählen einer auf dem ersten Server dargestellten URL durch den Benutzer zu der Conversion geführt hat.

Die der Erfindung zugrundeliegende Aufgabe wird auch durch ein Client-Server System der eingangs genannten Art dadurch gelöst, dass das Client-Server System zur Durchführung des erfindungsgemäßen Verfahrens eingerichtet ist.

Weitere Merkmale und Vorteile der vorliegenden Erfindung werden nachfolgend unter Bezugnahme auf die Figuren näher erläutert. Es wird betont, dass einzelne in den Figuren gezeigte Merkmale auch für sich alleine erfindungswesentlich sein können, selbst wenn dies in den Figuren nicht gezeigt und in der Beschreibung nicht ausdrücklich erwähnt ist. Ferner können die einzelnen in den Figuren gezeigten Merkmale miteinander kombiniert werden, selbst wenn diese Kombination in den Figuren nicht gezeigt und in der Beschreibung nicht ausdrücklich erwähnt ist. Es zeigen:
- Figur 1: ein Client-Server System gemäß einem ersten Ausführungsbeispiel;
- Figur 2: ein Blockdiagramm gemäß einer möglichen Ausführungsform;
- Figur 3: eine schematische Darstellung einer ersten URL mit einer in bekannter Weise als Parameter angehängten Klick-ID sowie einer zweiten URL mit einer erfindungsgemäß integrierten Klick-ID;
- Figur 4: ein Ablaufdiagramm gemäß einer möglichen Ausführungsform;
- Figur 5: ein Ablaufdiagramm gemäß einer weiteren möglichen Ausführungsform

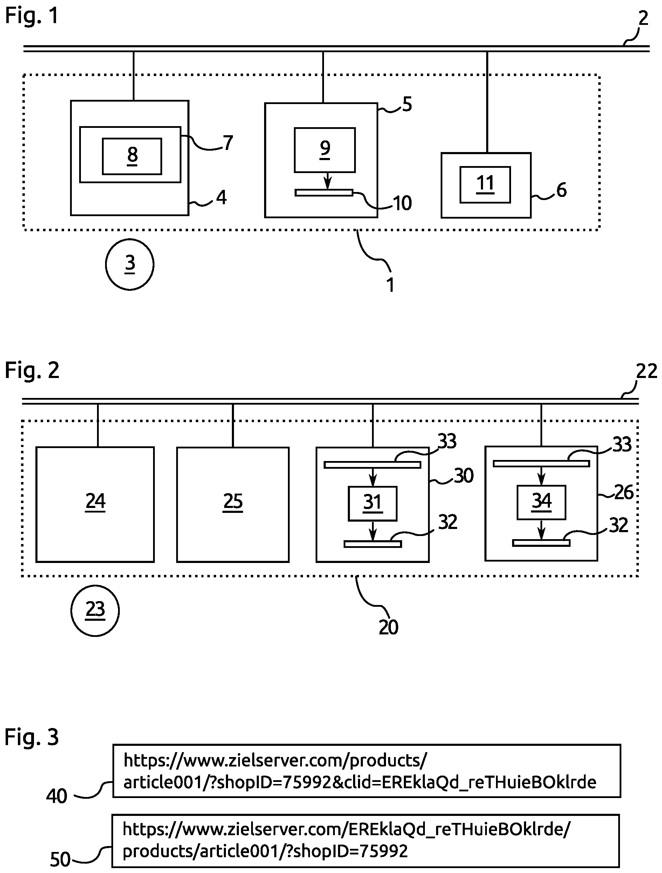

In Figur 1 ist ein Client-Server System 1 dargestellt, dessen Komponenten beispielsweise mittels eines Netzwerkkabels, bspw. eines Ethernet-Kabels, oder drahtlos, bspw. mittels einer WiFi-Verbindung, mit einem Kommunikationsnetzwerk, das vorzugsweise als das Internet 2 ausgebildet ist, verbunden ist. Das Client-Server System 1 umfasst ein einem Benutzer 3 zugeordnetes Endgerät 4, beispielsweise ein Smartphone, einen Tablet-Computer oder ein Laptop, einen ersten Server 5 sowie einen Zielserver 6. Das Endgerät 4 weist ein Display 7 auf, auf welchem eine Webseite 8 darstellbar ist. Der erste Server 5 ist beispielsweise als eine Suchmaschine ausgebildet und umfasst eine Funktionseinheit 9, die zur Erzeugung einer Klick-ID 10 programmiert ist. Der Zielserver 6 ist beispielsweise als ein Webshop realisiert und umfasst eine Funktionseinheit 11, die zur Interpretation und Verarbeitung von Informationsanfragen programmiert ist. Derartige Informationsanfragen können insbesondere Anfragen nach Produkten oder Dienstleistungen sein, die von dem Webshop angeboten werden.

Figur 2 zeigt ein weiteres Ausführungsbeispiel eines Client-Server Systems 20, das für die Ausführung des erfindungsgemäßen Verfahrens geeignet ist. Das Client-Server System 20 umfasst wie das Client-Server System 1 ein einem Benutzer 23 zugeordnetes Endgerät 24, einen ersten Server, der als Internet-Suchmaschine 25 ausgebildet ist, sowie einen Zielserver 26. Das Endgerät 24, die Suchmaschine 25 und der Zielserver 26 sind an das Internet 22 angeschlossen und können analog zu dem in Figur 1 dargestellten Endgerät 4, dem ersten Server 5 und dem Zielserver 6 ausgebildet sein, auch wenn in Figur 1 gezeigte Komponenten in Figur 2 aus Gründen der Übersichtlichkeit nicht explizit dargestellt sind.

Das Client-Server System 20 umfasst einen zweiten Server 30, der beispielsweise als ein Tracking-Server ausgebildet ist und eine Funktionseinheit 31 umfasst, mittels der eine Klick-ID 32 aus einer URL 33 extrahiert werden kann. In dem in Figur 2 dargestellten Ausführungsbeispiel weist der Zielserver 26 eine Funktionseinheit 34 auf, mittels der die Klick-ID 32 aus der URL 33 ebenfalls ausgelesen werden kann.

Wie aus der nachfolgenden Beschreibung weiterer Ausführungsbeispiele ersichtlich ist, kann die Übermittlung der Klick-ID 32 an den Zielserver 26 auch auf andere Weise durch den zweiten Server 30 veranlasst werden. Insbesondere ist es vorstellbar, dass die Klick-ID 32 durch den zweiten Server 30 aus der URL 33 entfernt wird und eine Weiterleitung der Informationsanfrage des Benutzers 23 mittels einer modifizierten URL erfolgt, die keine Klick-ID 30 enthält. Stattdessen übernimmt in dieser Ausführungsform der zweite Server 30 die Weiterverarbeitung der Klick-ID 32 und startet eine Kommunikation mit der Suchmaschine 25, um beispielsweise die Effektivität und Effizienz (d.h. den sog. Traffic) einer von dem Zielserver 26 gestarteten Werbekampagne bewerten zu können.

Mögliche Funktionsweisen und weitere Komponenten, die für eine Ausführung des erfindungsgemäßen Verfahrens auf den in den Figuren 1 und 2 beispielhaft gezeigten Client-Server Systemen 1 und 20 vorteilhaft sind, ergeben sich aus der nachfolgenden Beschreibung von zwei möglichen Ausführungsbeispielen des erfindungsgemäßen Verfahrens.

Figur 3 zeigt an einem vereinfachten Beispiel den Aufbau einer ersten URL 40, die eine in bekannter Weise als ein Parameter angehängte Klick-ID umfasst. Die Übergabe von Parametern gemäß der Syntax *"Parameter-Name*=*Parameter-Wert"* wird standardmäßig verwendet, um bei dem Anwählen eines auf einer Webseite dargestellten Links über die diesem Link zugeordneten URL Parameter an den jeweiligen Zielserver 6, 26 zu übergeben, dem die in der URL angegebene Adressinformation zugeordnet ist.

In dem in Figur 3 gezeigten Beispiel ist ein Zielserver 6, 26 beispielhaft unter der Adresse "*www.zielserver.com"* erreichbar. Bei der Anwahl eines Links auf einer Webseite 8, dem die URL 40 zugeordnet ist, wird durch den Client 4, 24 von dem Zielserver 6, 26 eine Information angefragt, die einem bestimmten Produkt zugeordnet ist, das intern auf dem Zielserver 6, 26 als *"article001"* bezeichnet wird. Das Anwählen des auf der Webseite 8 dargestellten Links bewirkt, dass die URL 40 an den Zielserver 6, 26 übermittelt wird. Der Zielserver 6, 26 wird daraufhin anhand des in der URL 40 enthaltenen Verzeichnispfades *"*/*products*/*article001"* die dort abgespeicherte Information interpretieren und in Abhängigkeit hiervon auf die Anfrage reagieren. Ist der Zielserver 6, 26 als ein Webshop realisiert, so ist in dem Verzeichnispfad möglicherweise eine Webseite abgespeichert oder es wird eine Webseite dynamisch erzeugt, die an den Client 4, 24 als Antwort auf die Anfrage gesendet wird.

Zusammen mit der URL 40 erhält der Zielserver 6, 26 auch die dort angehängten Parameter und erhält so die Klick-ID 10, 32, die dann in dem Zielserver 6, 26 verwendet werden kann, um die Anfrage dem Benutzer 3 zuzuordnen. Führt die Anfrage durch den Benutzer 3 zu einer Conversion bei dem Zielserver 6, 26, so wird die Klick-ID 10, 32 regelmäßig an den ersten Server 5 bzw. die Suchmaschine 25 übermittelt, um beispielsweise den Erfolg einer bei dem ersten Server 5 bzw. der Suchmaschine 25 gebuchten Werbekampagne bewerten und gegebenenfalls optimieren zu können. Allerdings kann aktuell nicht sichergestellt werden, dass die an eine URL 33, 40 angehängten Parameter zuverlässig übermittelt werden. Ist beispielsweise die Zeichenfolge, die den Wert eines Parameters angibt, zu lang oder ist ein Internetbrowser aus anderen Gründen so konfiguriert, dass er einzelne oder mehrere Parameter von einer URL 33, 40 abschneidet, so ist es dem Zielserver 6, 26 nicht mehr möglich, beispielsweise Informationskampagnen oder Werbekampagnen zu einzelnen Produkten effektiv und effizient zu gestalten.

Um sicherzustellen, dass die Klick-ID 10, 32 dem Zielserver 6, 26 für weitere Auswertungen zur Verfügung gestellt wird, wird diese erfindungsgemäß wie in Figur 3 in einer URL 50 beispielhaft gezeigt in Form eines Unterverzeichnisses in den mittels der URL 50 übergebenen Verzeichnispfad integriert. In dem in der URL 50 gezeigten Ausführungsbeispiel ist die Klick-ID *"EREklaQd_reTHuieBOklrde"* als ein virtuelles Verzeichnis in dem Verzeichnispfad aufgenommen und kann dann in geeigneter Weise von dem Zielserver 6, 26 interpretiert und weiterverarbeitet werden.

Informationen, die Teil eines Verzeichnispfades sind, werden aktuell von Internet-Browsern oder Netzwerk-Routern regelmäßig nicht verändert, da Verzeichnispfade von grundlegender Bedeutung dafür sind, dass ein Zielserver 6, 26 die von ihm angeforderte Information auffinden bzw. erzeugen und an den anfragenden Client 4, 24 zurücksenden kann. Das Verstecken' der Klick-ID 10, 32 innerhalb des Verzeichnispfades in einer URL 50 ermöglicht folglich eine sichere Übertragung dieser Information an den Zielserver 6, 26.

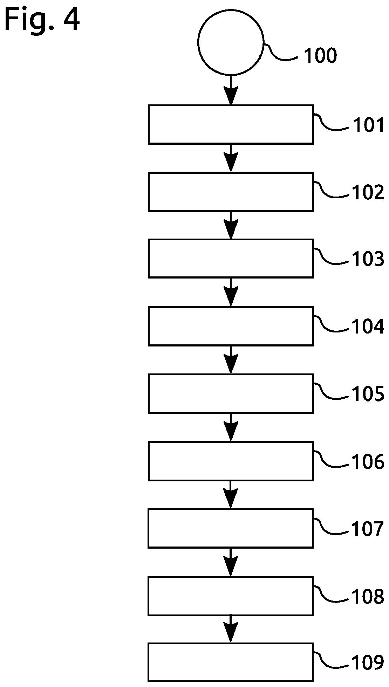

In Figur 4 ist ein Ablaufdiagramm dargestellt, das einzelne Schritte eines möglichen Ausführungsbeispiels des erfindungsgemäßen Verfahrens zeigt. Das Verfahren beginnt in einem Schritt 100. In einem Schritt 101 wird von einem Benutzer 3, 23 eine Informationsanfrage an einen ersten Server 5, beispielsweise in Form einer Suchanfrage an eine Internet-Suchmaschine 25, gestellt und über ein Kommunikationsnetzwerk 2, beispielsweise das Internet 22, an die Suchmaschine 25 übermittelt.

In einem Schritt 102 weist die Suchmaschine 25 dem Benutzer 3, 23, der die Suchanfrage gestellt hat, in bekannter Weise eine Klick-ID 10, 32 zu. Dies kann dadurch erfolgen, dass der Inhalt eines auf dem Client 4, 24 bei einer früheren Interaktion mit der Suchmaschine 25 abgespeichertes Cookie ausgelesen wird, so dass eine Zuordnung der aktuellen Anfrage zu diesem Client 4, 24 bzw. dem Benutzer 3, 23 möglich ist. Eine andere Möglichkeit ist, mittels einer Profildatenbank, auf die die Suchmaschine 25 Zugriff hat, festzustellen, ob der Benutzer der Suchmaschine aufgrund vorausgegangener Suchanfragen bereits bekannt ist. Hierzu können Informationen, die zusammen mit der Suchanfrage automatisch von einem auf dem Client 4, 24 ablaufenden Internet-Browser an die Suchmaschine 25 gesendet werden, in bekannter Weise herangezogen werden, wie beispielsweise eine Browser-ID, eine MAC-Adresse und/oder eine IP-Adresse.

In einem Schritt 103 erzeugt der erste Server 5 bzw. die Internet-Suchmaschine 25 eine dynamische Webseite 8, die verschiedene Internet-Links enthält. Die visuelle Darstellung der Internet-Links auf der Webseite 8 kann in bekannter Weise mittels beschreibender Texte, grafischer Elemente und/oder Videos erfolgen. Den Internet-Links sind URLs 33, 40, 50 zugeordnet, die Adressen zu weiterführenden Informationen enthalten. Mindestens eine der URLs 33, 50 verweist auf eine Information, die von einem erfindungsgemäßen Zielserver 6, 26 bereitgestellt wird. Dieser URL 50 wird die aufgefundene oder erzeugte Klick-ID 10, 32 als Teil des Verzeichnispfades wie beispielhaft in Figur 3 gezeigt und der zugehörigen Beschreibung erläutert, hinzugefügt.

In einem Schritt 104 wird die Webseite 8 an den Client 4, 24 über das Internet 22 übermittelt und dort dem Benutzer 3, 23 auf dem Display 7 angezeigt.

In einem Schritt 105 wählt der Benutzer 3, 23 den Link, der zu einer Information auf dem Zielserver 6, 26 verweist, an. Gemäß dem in Figur 4 gezeigten Ausführungsbeispiel wird daraufhin in einem Schritt 106 eine Informationsanfrage an den Zielserver 6, 26 gesendet, wobei hierbei insbesondere die die Klick-ID 10, 32 als virtuelles Verzeichnis enthaltende Information an den Zielserver 6, 26 übermittelt wird.

In einem Schritt 107 extrahiert der Zielserver 6, 26 die Klick-ID 10, 32 aus dem Verzeichnispfad, den er bei der Übermittlung der Informationsanfrage in Schritt 106 als URL 33, 50 erhalten hat und bearbeitet die Informationsanfrage in einem Schritt 108 beispielsweise dadurch, dass er eine statische oder dynamisch erzeugte Webseite an den Client 4, 24 zurücksendet. Die Extraktion der Klick-ID 10, 32 im Zielserver 6, 26 kann bspw. durch ein sog. proxy rewrite, d.h. eine Ergänzung oder Umprogrammierung der Regeln in der Serverkonfiguration, im Zielserver 6, 26 erfolgen. Dies kann den Zielserver 6, 26 bspw. dazu veranlassen, Informationen über Traffic oder den Inhalt einer Webseite 8 von einer anderen Stelle zu holen.

In einem Schritt 109 verarbeitet der Zielserver 6, 26 die Klick-ID 10, 32 in bekannter Weise weiter, beispielsweise dadurch, dass interne Statistiken aktualisiert, eine Optimierung einer Werbekampagne durchführt und/oder insbesondere im Falle einer Conversion die Klick-ID 10, 32 an die Suchmaschine 25 gesendet werden, um auf diese Weise weitere Informationen über die Effektivität und die Effizienz einer Werbekampagne zu generieren beziehungsweise zu erhalten.

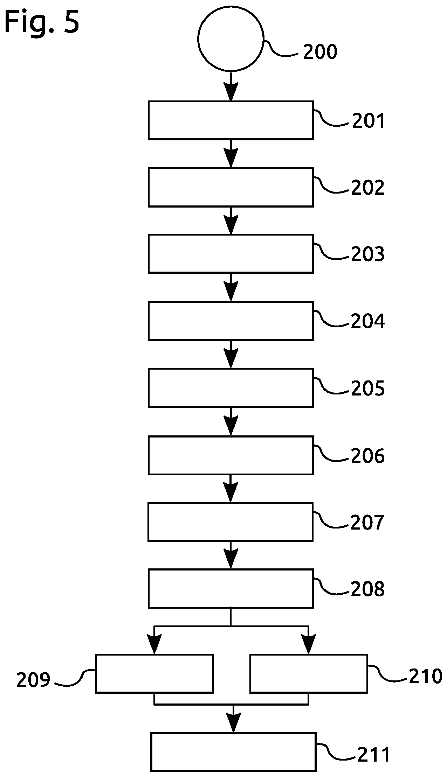

In Figur 5 ist ein weiteres mögliches Ausführungsbeispiel des erfindungsgemäßen Verfahrens gezeigt. Dieses Verfahren beginnt in einem Schritt 200. In einem Schritt 201 wird analog zu dem in Figur 4 gezeigten Verfahren von einem Benutzer 3, 23 eine Informationsanfrage an einen ersten Server 5 beziehungsweise eine Internet-Suchmaschine 25 gesendet. In einem Schritt 202 weist die Suchmaschine 25 dem Benutzer 3, 23 eine Klick-ID 10, 32 zu, erzeugt in einem Schritt 203 eine dynamische Webseite 8, die verschiedene Internet-Links enthält und übermittelt in einem Schritt 204 die Webseite 8 an den Client 4, 24 über das Internet 22 übermittelt. Der Benutzer 3, 23 wählt in einem Schritt 205 den Link, der zu einer Information auf dem Zielserver 6, 26 verweist, an.

In dem in Figur 5 dargestellten Ausführungsbeispiel ist die URL 32, 50 so aufgebaut, dass in einem Schritt 206 das Anwählen des mit dieser URL 32, 50 korrespondierenden, auf der Webseite 8 dargestellten Links eine Weiterleitung der Informationsanfrage an einen zweiten Server 30 bewirkt. Der zweite Server 30 ist beispielsweise als ein sogenannter Trackingserver ausgebildet, dessen Funktionalität u.a. darauf spezialisiert ist, Informationen über Aktivitäten auf Webseiten zu sammeln und zu analysieren, so dass auf dieser Grundlage Webseiten optimal gestaltet, Produktportfolios verbessert und Werbekampagnen optimiert werden können. Um derartige Aufgaben auszuführen, extrahiert der zweite Server 20 gemäß dem in Figur 5 gezeigten Ausführungsbeispiel in einem Schritt 207 die Klick-ID 10, 32, welche erfindungsgemäß als Teil des Verzeichnispfades des Zielservers 6, 26 in der URL 32, 50 abgespeichert ist.

In einem Schritt 208 wird die Informationsanfrage von dem zweiten Server 30 an den Zielserver 6, 26 weitergeleitet.

In einem Schritt 209 bearbeitet der Zielserver 6, 26 die durch den zweiten Server 30 weiter geleitete Informationsanfrage beispielsweise dadurch, dass er eine statische oder dynamisch erzeugte Webseite an den Client 4, 24 zurücksendet.

In einem Schritt 210 erfolgt eine Weiterverarbeitung der Klick-ID 10, 32 bei dem zweiten Server 30 beispielsweise dadurch, dass der zweite Server 30 Informationen, die mit dem Anwählen des Links durch den Benutzer 3, 23 in Schritt 205 in Zusammenhang stehen, in bekannter Weise sammelt und/oder auswertet und gegebenenfalls auch eine Verbindung zu der Suchmaschine 25 herstellt, um dort weitere Informationen bezüglich des erfolgten Klicks bzw. von der Suchmaschine 25 für weitere Analysen zur Verfügung gestellte Informationen abzufragen.

In einem Schritt 211 verarbeiten der zweite Server 30 und/oder der Zielserver 6, 26 die Klick-ID 10, 32 in bekannter Weise weiter, beispielsweise indem interne Statistiken aktualisiert, eine Optimierung einer Werbekampagne durchführt und/oder insbesondere im Falle einer Conversion die Klick-ID 10, 32 an die Suchmaschine 25 gesendet werden, um auf diese Weise weitere Informationen über die Effektivität und die Effizienz einer Werbekampagne zu generieren beziehungsweise zu erhalten.

## Patentansprüche

1. Verfahren zur Übermittlung einer Klick-ID (10; 32) mittels einer URL (33; 50) in Abhängigkeit von der Anwahl der von einem ersten Server (5), insbesondere einer Internet-Suchmaschine (25) bereitgestellten URL (33; 50) mittels eines einem Benutzer (3; 23) zugeordneten Clients (4; 24), wobei die URL (33; 50) auf einen Zielserver (6; 26) verweist, **dadurch gekennzeichnet, dass** die Klick-ID (10; 32) in einer einem Unterverzeichnis des Zielservers (6; 26) entsprechenden Form in die URL (33; 50) integriert ist.

2. Verfahren nach Anspruch 1, **dadurch gekennzeichnet, dass** auf dem Zielserver (6; 26) die Klick-ID (10; 32) extrahiert wird.

3. Verfahren nach Anspruch 1 oder 2, **dadurch gekennzeichnet, dass** zumindest im Falle einer Conversion die extrahierte Klick-ID (10; 32) an den ersten Server (5) für eine weitere Bearbeitung übermittelt wird.

4. Verfahren nach einem der vorangehenden Ansprüche, **dadurch gekennzeichnet, dass** zum Auffinden des Speicherortes der mittels der URL (33; 50) von dem Zielserver (6; 26) angefragten Information die in Form eines Unterverzeichnisses integrierte Klick-ID (10; 32) nicht berücksichtigt wird.

5. Verfahren nach einem der vorangehenden Ansprüche, wobei die Anwahl der URL (33; 50) eine Weiterleitung zu einem zweiten Server (30) bewirkt, **dadurch gekennzeichnet, dass** der zweite Server (30) die in Form eines Unterverzeichnisses integrierte Klick-ID (10; 32) extrahiert und für eine weitere Verarbeitung abspeichert.

6. Verfahren nach Anspruch 5, **dadurch gekennzeichnet, dass** der zweite Server (5) die in Form eines Unterverzeichnisses in die URL (33; 50) integrierte Klick-ID (10; 32) aus der URL (33; 50) entfernt und mit dieser veränderten URL eine Weiterleitung zu dem Zielserver (6; 26) veranlasst.

7. Client-Server System (1; 20), wobei das Client-Server System (1; 20) mit einem Kommunikationsnetzwerk (2; 26) verbindbar ist und mindestens einen ersten Server (5), einen Zielserver (6; 26) sowie einen einem Benutzer (3; 23) zugeordneten Client (4; 24) umfasst, **dadurch gekennzeichnet, dass** auf dem Client-Server System (1; 20) ein Verfahren nach einem der Ansprüche 1 bis 6 ausführbar ist.
